# EUROPEAN PATENT APPLICATION

(11) **EP 0 954 987 A2**
(43) Date of publication of application: **10.11.1999**
(21) Application number: 99303184.8
(22) Date of filing: 23.04.1999
(51) Int. Cl.: A23L 2/46, A23L 3/20, A23L 3/02

(54) **Heat-treatment of potable liquids**

(30) Priority: 02.05.1998 GB 9809377
(71) Applicant: Bass Public Limited Company, Burton-on-Trent, Staffordshire DE14 2WB (GB)
(72) Inventor: Boulton, Christopher Alan, Burton-Upon-Trent, Staffordsh. DE13 OJD (GB); Price, Stephan Geoffrey, Ashbourne, Derbyshire DE6 5HQ (GB)
(74) Representative: Kinton, Colin David

(57) **Abstract**

Spoilage of a potable liquid by spore-forming micro-organisms is prevented by a first heating stage in which the bulk liquid is subjected to heat at a constant temperature and a second heating stage in which heat is applied to sealed containers including the liquid treated in the first heating stage.

To be accompanied, when published, by Figure 1 of the drawings.

## Description

The invention relates to a process for the heat-treatment of potable liquids, to potable liquids obtained by said process and to apparatus for carrying out said process. The present invention relates especially to the heat-treatment of potable liquids containing a major proportion of one or more fruit juices, especially to non-carbonated, fruit juice-based drinks containing up to 5% by volume of a potable alcohol, in order to prevent the spoilage of such drinks by spore-forming micro-organisms.

It is known to heat-treat potable liquids in order to prevent, or substantially to minimise, spoilage by micro-organisms, one example of such treatment being pasteurisation, where the liquid is held for a specified time at an elevated temperature in order to destroy any micro-organisms present, which have the potential to grow under the conditions present within the liquid. However, the spores of spore-forming micro-organisms are not affected by customary pasteurising temperatures and to maintain the potable liquid at a temperature sufficient to kill the spores has been found to cause physical and/or chemical deterioration of one or more components of the liquid, especially if the liquid is a fruit juice-based drink containing alcohol.

Another heat-treatment process is known in which the potable liquid is heated at about 95°C for up to 20 minutes, the liquid subsequently being dispensed into containers and the temperature maintained at about 97°C during sealing. This process has been found to have an adverse effect upon the taste of a drink containing a major proportion of fruit juice.

In a further known heat-treatment process, that of flash-pasteurisation, a potable liquid is heated at a temperature of up to 90°C for a period of up to 1 minute. Hitherto, such a process has only been found to be effective in the treatment of potable liquids (such as soups or the like) having "low-to-medium" heat-transfer characteristics.

It is also known to add, to drinks containing a major proportion of fruit juice, chemical preservatives such as benzoates and sorbates. Although such additives are effective against micro-organisms, they tend to have an adverse effect on the taste of some drinks so treated.

The Applicants have devised a process for preventing microbial spoilage in potable liquids, especially potable liquids containing a major proportion of fruit juice, without adversely affecting the appearance, colour, flavour or organoleptic properties of the liquid.

The Applicants also provide herein an apparatus for carrying out their process.

Essentially, the process of the present invention consists of subjecting the potable liquid to two heat-treatment stages.

Accordingly, the present invention provides, in a first aspect, a process for preventing the spoilage of a potable liquid by spore-forming micro-organisms, in which, in a first stage, heat at a constant temperature is applied to the bulk liquid, the liquid from said first stage is dispensed into containers which are subsequently sealed and, in a second stage, heat is applied to the sealed containers including the liquid.

Although it is not intended that the present invention should be construed in accordance with any particular theory, it is believed that the first heating stage causes any spores present in the liquid to germinate and form vegetative cells and that the second heating stage results in killing of the cells. In the practice of the present invention, therefore, it is intended that the cells which result from the first heating stage should be destroyed during the second heating stage, i.e. before those cells can themselves form spores.

Thus, the present invention provides, in a second aspect, a process for preventing the spoilage of potable liquid by spore-forming micro-organisms, said process comprising a first heating stage in which the bulk liquid is heated to a constant temperature to cause any spores present in the liquid to germinate and to form cells, dispensing the liquid into containers which are subsequently sealed, followed by a second heating stage in which the sealed containers including the liquid are heated to a temperature sufficient to destroy said cells.

The present invention also provides a potable liquid produced by the process hereinabove described.

The present invention further provides an apparatus for carrying out the process hereinabove described.

With reference to the process of the present invention, the first heating stage may conveniently comprise flash-pasteurisation in which the liquid is subjected to the application of heat at a constant temperature by being passed through a heat-exchanger.

The heat applied to the bulk liquid is measured in pasteurisation units (hereinafter "PU") a PU is defined as a heat-treatment equivalent to 1 minute at 60°C. It is known that the PU number increases linearly with time and logarithmically with temperature.

In the first heating stage according to the process of the present invention, the heat applied to the bulk liquid is suitably in the range 3000 to 50,000 PU, for example 3000 to 10,000 and especially about 5000 PU. This may be achieved by heating the bulk liquid at 85 to 90°C for 15 to 60 seconds, for example at 88°C for 30 seconds. It may be convenient, for example, to fix the time of the first heating stage and to adjust the temperature accordingly, especially where the process of the present invention is to be a continuous process.

Preferably, the second heating stage according to the process of the present invention is carried out at an applied heat of 10 to 500 PU, especially about 80 PU. This may be achieved, for example, by heating the filled sealed containers at about 64°C for 18 minutes. Alternatively, the filled sealed containers may be heated so that the temperature of the liquid in the containers is varied with time, for example by heating in accordance with a predetermined temperature-time profile. A suitable temperature-time profile for this purpose is one in which the temperature is increased from about 20°C to about 65°C over a period of about 25 minutes and is subsequently reduced to about 20°C over the next period of about 25 minutes.

A typical temperature-time profile for the second heating stage in accordance with the process of the present invention is set out in TABLE 1 (below):

**TABLE 1**

| **Temperature (°C)** | **Time (mins)** |
|---|---|
| | |
| 27.5 | 5 |
| 40 | 4.5 |
| 53 | 4.5 |
| 69 | 8.5 |
| 65.5 | 10 |
| 51 | 4.5 |
| 38 | 4.5 |
| 25.5 | 5 |
| | |
| **Total Time = 46.5 minutes** | |

The second heating stage according to the process of the present invention may conveniently be carried out in a device such as a tunnel-pasteuriser, wherein the filled and sealed containers are subjected to heating by means of water-sprays at an appropriate temperature, whilst being moved through and along the tunnel-pasteuriser (for example by means of a conveyor belt or the like).

The potable liquid produced according to the process of the present invention may comprise a major proportion (for example at least 65% by volume) of one or more fruit juices. Preferably, the potable liquid may include up to about 95% by volume of one or more fruit juices and correspondingly up to about 5% by volume of a potable alcohol.

The apparatus for carrying out the process according to the present invention consists essentially of a flash-pasteuriser for carrying out the first heating stage on the bulk liquid, said flash-pasteuriser being operatively associated with means for dispensing the flash-pasteurised liquid into containers which are subsequently sealed and said dispensing and sealing means being operatively associated with a tunnel-pasteuriser for carrying out the second heating stage on the sealed containers including the liquid.

Preferably, the flash-pasteuriser comprises a heat-exchanger of the "plate-and-frame" type, known **per se**. Such a device comprises a plurality of mutually-parallel metal plates, each plate containing one or more enclosed channels through which a heating fluid (e.g. heated water) can be circulated. The potable liquid to be heated in the flash-pasteuriser is made to flow, in a thin continuous layer, over the surfaces of the plates and is heated by the water in the enclosed channels.

Most suitably, the apparatus for carrying out the process according to the present invention includes, in the following order and in operative association with one another, the following components:
(i) storage means for holding the bulk potable liquid prior to the first heating stage (for example, a tank or the like adapted for batch or continuous filling);
(ii) delivery means (for example, a pump or the like) to convey the bulk liquid to the flash-pasteuriser;
(iii) flash-pasteurisation means to apply heat to the liquid in accordance with the first heating stage;
(iv) means, including chilling means, to convey the liquid from the flash-pasteuriser to a device for dispensing the liquid into containers which are subsequently sealed;
(v) means to convey the filled and sealed containers to a tunnel-pasteuriser to apply heat to the sealed containers including the liquid in accordance with the second heating stage.

An apparatus in accordance with the present invention will be illustrated, merely by way of example, in the following description and with reference to the accompanying drawings.

In the drawings:

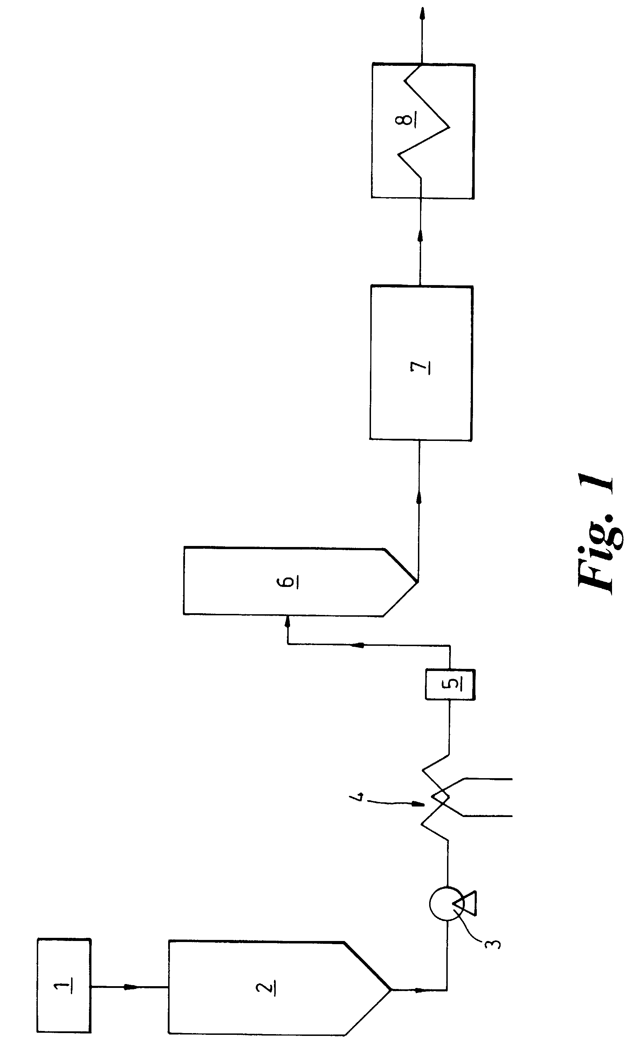

**Figure 1** is a schematic block-diagram showing the apparatus according to the present invention; and
**Figure 2** is a typical profile (of temperature variation with time) in connection with the second heating stage of the process according to the present invention.

The bulk liquid ingredients, including one or more fruit juices (generally provided in frozen form at about -20°C) together with flavourings and/or sweeteners and if required up to about 5% by volume of a potable alcohol, are mixed in a formulation tank 1. After formulation, the bulk liquid (which is typically at a temperature of 4°C or lower) is loaded into the storage tank 2. The liquid is conveyed, by means of a pump 3, to the flash-pasteuriser 4, where typically the liquid is heated at about 88°C for 30 seconds (equivalent to an applied heat of about 5000 PU) to conclude the first heating stage.

The liquid is further conveyed, through a chiller 5 which reduces the temperature of the liquid to about 3°C, to a buffer tank 6 adapted to maintain a constant "head" of the liquid to the dispensing and sealing means 7, in which the liquid is dispensed into containers which are subsequently sealed.

The filled and sealed containers are conveyed to a tunnel-pasteuriser 8, where the containers including the liquid are sprayed with water in accordance with a pre-determined temperature-time profile to conclude the second heating stage.

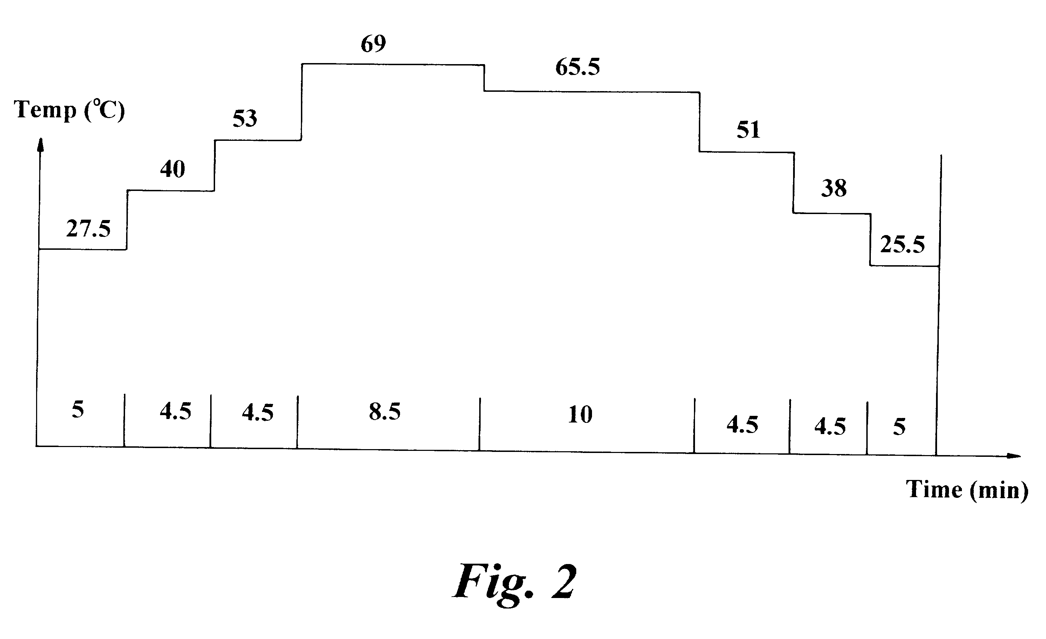

A typical temperature-time profile is illustrated in Figure 2.

The overall time required for a process according to the present invention is between 30 minutes (before which time the spores will not have been germinated) and 6 hours (after which time many of the vegetative cells will have re-sporulated). A typical time for the process would be between 1 hour and four hours, most suitably about two hours.

Potable liquids which have been treated according to the process of, or in the apparatus of, the present invention have been found to have improved taste, longer storage-life and improved appearance when compared to liquids treated by hitherto-used methods.

## Claims

1. A process for preventing the spoilage of a potable liquid by spore-forming micro-organisms, said process being **characterised by** a first stage, in which heat at a constant temperature is applied to the bulk liquid, the liquid from said first stage being dispensed into containers which are subsequently sealed and by a second stage, in which heat is applied to the sealed containers including the liquid.

2. A process according to Claim 1, **characterised in that** the first heating stage comprises flash-pasteurisation of the bulk liquid.

3. A process according to Claim 2, **characterised in that** the heat applied to the bulk liquid in the first heating stage is in the range 3000 to 50,000 PU, for example 3000 to 10,000 PU and especially about 5000 PU.

4. A process according to any one of Claims 1 to 3, **characterised in that** the bulk liquid is heated in the first heating stage at a temperature of 85 to 90°C for 15 to 60 seconds, for example at 88°C for 30 seconds.

5. A process according to any one of Claims 1 to 4, **characterised in that** the heat applied to the liquid in the filled, sealed containers in the second heating stage is in the range 10 to 500 PU, for example about 80 PU.

6. A process according to Claim 5, **characterised in that** the filled, sealed containers are heated in the second heating stage at a temperature of about 64°C for about 18 minutes.

7. A process according to Claim 5, **characterised in that** the heat applied to the liquid in the second heating stage is varied with time.

8. A process according to Claim 7, **characterised in that** the temperature of the liquid in the second heating stage is increased from about 20°C to about 65°C over a period of about 25 minutes and is subsequently reduced to about 20°C over the next period of about 25 minutes.

9. A process according to Claim 7 or 8, **characterised in that** the temperature of the liquid in the second heating stage is varied according to the temperature-time profile illustrated in Figure 2 of the accompanying drawings.

10. A process according to any one of the preceding claims, **characterised in that** the second heating stage comprises tunnel-pasteurisation of the liquid.

11. Apparatus for carrying out a process according to any one of Claims 1 to 10, said apparatus **being characterised by** a flash-pasteuriser (4) for carrying out the first heating stage on the bulk liquid, said flash-pasteuriser being operatively associated with means (7) for dispensing the flash-pasteurised liquid into containers which are subsequently sealed and said dispensing and sealing means (7) being operatively associated with a tunnel-pasteuriser (8) for carrying out the second heating stage on the sealed containers including the liquid.

12. Apparatus according to Claim 11 **characterised in that** the flash-pasteuriser (4) comprises a heat-exchanger, for example a heat-exchanger of the "plate-and-frame" type, known **per se**.

13. Apparatus according to Claim 11 or 12, **characterised in that**, in the tunnel-pasteuriser (8), the filled and sealed containers are subjected to heating by means of sprays of heated water whilst being moved through and along the tunnel-pasteuriser (8).

14. Apparatus according to any one of Claims 11 to 13, **characterised in that** said apparatus further includes storage means (2) for holding the bulk potable liquid prior to the first heating stage, delivery means (3) to convey the bulk liquid to the flash-pasteuriser, means (6) including chilling means (5) to convey the liquid from the flash-pasteuriser (4) to the dispensing and sealing means (7) and means to convey the filled and sealed containers to the tunnel-pasteuriser (8) for the second heating stage.

15. A process for preventing the spoilage of a potable liquid by spore-forming micro-organisms, said process being **characterised by** a first heating stage in which the bulk liquid is heated at a constant temperature to cause any spores present in the liquid to germinate and form cells and the liquid is dispensed into containers which are subsequently sealed and **further characterised by** a second heating stage in which the sealed containers including the liquid are heated to a temperature sufficient to destroy said cells.
